(19) Europäisches Patentamt / European Patent Office / Office européen des brevets

(11) **EP 2 925 595 B1**

(12) **EUROPEAN PATENT SPECIFICATION**

(45) Date of publication and mention
of the grant of the patent:
**21.09.2016 Bulletin 2016/38**

(51) Int Cl.:
**B62M 3/00** (2006.01)

(21) Application number: **13799656.7**

(22) Date of filing: **29.11.2013**

(86) International application number:
**PCT/GB2013/053167**

(87) International publication number:
**WO 2014/083353 (05.06.2014 Gazette 2014/23)**

(54) **IMPROVEMENTS TO CYCLE CRANKS**

VERBESSERUNGEN AN RADKURBELN

PERFECTIONNEMENTS DE MANIVELLES DE BICYCLETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2012 GB 201221540
19.12.2012 GB 201222907**

(43) Date of publication of application:
**07.10.2015 Bulletin 2015/41**

(73) Proprietor: **Bf1 Systems Limited
Norwich, Norfolk IP22 4ER (GB)**

(72) Inventors:
• **BAILEY, John
Norwich
Norfolk IP22 4ER (GB)**
• **SKIPPER, Gavin Mark
Ely
Cambridgeshire CB6 2NB (GB)**
• **IRELAND, Kevin James
Hextable
Kent BR8 7QS (GB)**
• **SHINGLETON, James Ravi
Norwich
Norfolk NR16 2SW (GB)**

(74) Representative: **ip21 Ltd
Central Formalities Department
Lakeside 300
Old Chapel Way
Broadland Business Park
Norwich
Norfolk NR7 0WG (GB)**

(56) References cited:
**EP-A2- 2 058 637        WO-A1-2009/006673
WO-A1-2011/063468**

## Description

<u>Field of the Invention</u>

The invention relates to cycle cranks, cycles, methods of measuring a cycle crank angular position and computer software configured to operate the method.

The term "cycle" is to be interpreted as any device which incorporates a crank which an operator can rotate by applying a force in an appropriate direction. It may therefore be for example a bicycle, tricycle, a tandem, a pedalo, a buggy, a cart, a hand cycle, a fixed or mobile vehicle incorporating a crank which an operator can rotate by applying a force in an appropriate direction.

<u>Background to the Invention</u>

Measuring the forces which are applied to a crank during a cycling motion is well known. Several methods have been developed to correlate the amount of force and/or torque applied to a crank with its angular position in order for example to assist an athlete in optimising his/her cycling action. An XY hall-effect magnetic sensor and donut magnet have been used to assist in the determination of a crank's angular position. This kind of prior art method requires a complex set up and relatively complex components on both the crank and the frame.

One of the objectives of the invention is to simplify the method of measuring a cycle crank angular position. Another object of the invention in certain aspects is to increase the accuracy of the method. Another object of the invention in certain embodiments is to provide for a system which can be housed within the crank itself and substantially reduce the components which might be external to the crank.

The following prior art documents are acknowledged: WO201106348 which describes all the features of the preamble of claims 1 and 5, WO2009006673 and EP2058637.

<u>Summary of the Invention</u>

In a first broad independent aspect, the invention provides a cycle crank comprising a pair of crank arms, each crank arm comprising a sensor for determining, in use, a value representative of a force applied to said crank arm during a revolution of said crank arm; and a wireless transmitter, wherein both said crank arms are configured to operate in a first mode of operation and in a second mode of operation; in said first mode of operation the wireless transmitters of said crank arms communicate together and in said second mode of operation said wireless transmitters of said crank arms communicate directly to a receiver located remotely from said crank arms; characterised in that in said first mode of operation said transmitters transmit at a first rate of transmission and in said second mode of operation said transmitters transmit at a second rate of transmission; said second rate of transmission being higher than said first rate of transmission.

This configuration is particularly advantageous because it allows switching between modes of operation which allows the transmission to occur successfully even when an additional device is in proximity. It also allows more flexibility in order to allow transmission of more informative data sets at a higher rate or with a greater compatibility with conventional displays when operating at a lower rate.

This would allow transmission to a bespoke receiver when transmitting at the higher rate whilst providing the option of transmitting data to other kinds of receivers.

In a further subsidiary aspect, the first crank arm incorporates a sensor master channel transmitting data; the first crank arm further incorporating a slave channel for receiving data from the second crank arm containing force or torque data from the second crank arm; whereby the force or torque data from the second crank arm in conjunction with force or torque data and cadence data from the first crank arm allows power to be calculated. This configuration is particularly efficient in determining power whilst taking into account the forces applied to both crank arms.

In a further subsidiary aspect, in a second mode of operation the first crank arm reconfigures its slave channel as a master channel for transmitting data at a higher rate of transmission and a second crank arm transmits data at a higher rate of transmission than in the first mode of operation. This is particularly advantageous in terms of efficiency of reconfiguration.

In a further broad independent aspect, the invention provides a cycle crank comprising at least one crank arm, each crank arm comprising a sensor for determining, in use, a value representative of a force applied to said crank arm during a revolution of said crank arm; and a wireless transmitter; wherein said at least one crank arm is configured to operate in a first mode of operation where said transmitter is configured to transmit at a first rate of transmission; characterised in that said transmitter is configured to transmit in a second mode of operation at a second rate of transmission; said second rate of transmission being higher than said first rate of transmission.

In a subsidiary aspect, said wireless transmitter is configured to transmit in one of three modes of operation at rates of transmission pertaining to three different frequency ranges. This allows operation selectively at a relatively high rate of transmission, a medium rate of transmission, and a relatively low rate of transmission.

In a subsidiary aspect, a first range comprises frequencies lower than 10 Hz. In a preferred embodiment, the rate of frequency is 4 Hz.

In a subsidiary aspect, a second range comprises frequencies of 10 to 150 Hz.

In a subsidiary aspect, a third range comprises frequencies of 150 Hz and greater.

Brief description of the Figures

Figure 1, shows a schematic side view of a crank.

Figure 2, shows a box diagram with the primary components of a system according to the invention when incorporated into a crank and a frame.

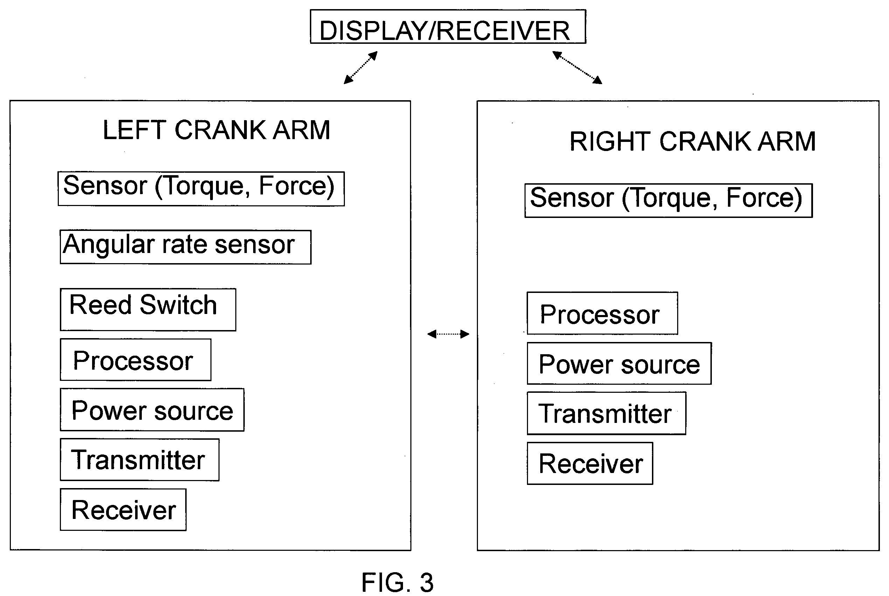

Figure 3 shows a system of crank arms in box diagram form.

Detailed description of the Figures

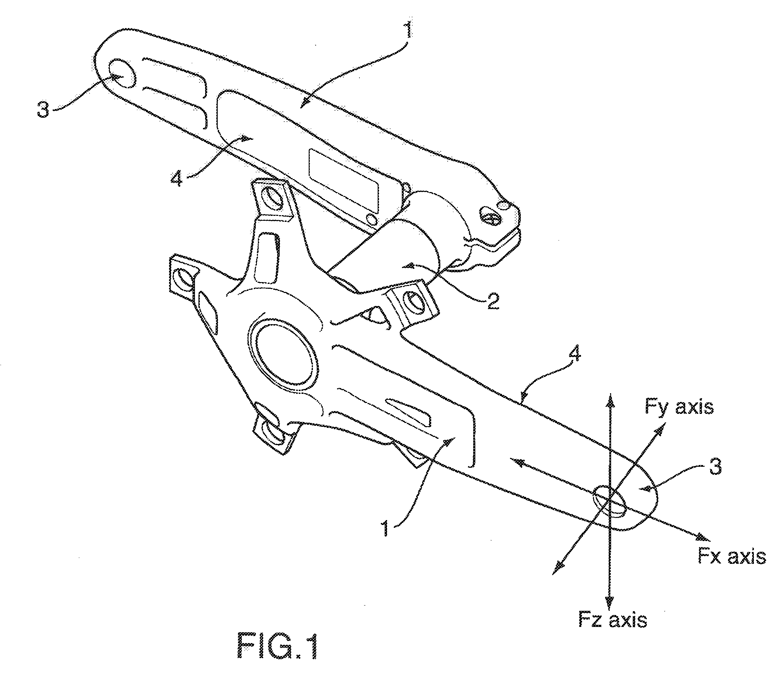

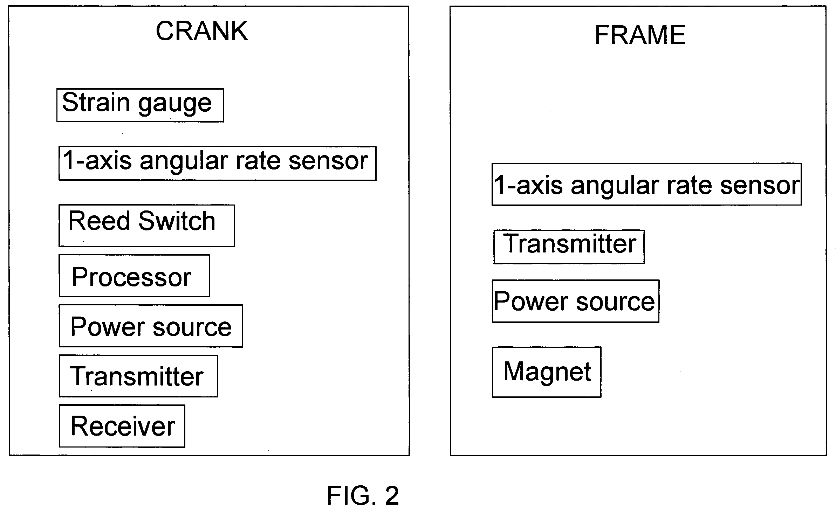

Figure 1, shows a cycle crank or cycle crank arm 1 comprising a first portion 2 for attachment to a cycle and a second portion 3 spaced from said first portion for attachment to a pedal. The term pedal is to be interpreted broadly and may for example include handles for engagement with an operator's body. At a portion spaced from the first portion 2, a sensor compartment 4 is provided within the envelope of the crank. Within compartment 4 the various crank components shown in figure 2 might be housed. In particular, the crank compartment would in a preferred embodiment contain a strain gauge or strain gauges for determining the forces which are applied to the crank. In a preferred embodiment, a strain gauge is provided and oriented in the longitudinal direction (eg. Fx axis as shown in figure 1) of the crank to determine longitudinal forces resulting from the crank being either in tension or in compression. In a further preferred embodiment, a further strain gauge is provided to determine forces in a direction substantially perpendicular to the longitudinal axis (eg. Fz axis) as the crank is submitted to negative or positive bending in the Fz axis. In a further preferred embodiment, a further strain gauge is provided and oriented in the Fy direction to determine forces resulting from in positive or negative bending in the Fy axis. The strain gauges or other similar sensors are employed to derive the force characteristics substantially throughout each rotation. In a further embodiment, a single two axis force measuring sensor may be employed which measures a downward force component and a torque component which is perpendicular to the downward force component.

In a further embodiment, a three axis force measuring sensor may be employed which measures a downward force component (Fx axis), a torque component (Fz axis) which is perpendicular to the downward force component and a lateral force component (Fy axis), all components being perpendicular to each other.

In addition to the strain gauge or force measuring sensor, a 1-axis angular rate sensor is provided. This angular rate sensor may be referred to as a gyroscope (also known as a gyro). It may for example be a Z axis gyro. A processor would be provided to receive the signals in the form for example of voltages. The processor would be configured to integrate the values representative of angular rate sensed by the 1-axis gyro in order to determine the angular position. This configuration allows the angular positions to be determined substantially throughout each cycle of rotation not only at a single point per revolution as in a conventional cadence sensor. This allows therefore the force characteristics to be determined throughout a revolution and associated with any angle during a revolution. It therefore allows in-cycle analysis rather than cumulative analysis as present in prior art cadence sensors.

In order to determine the start of a cycle on a consistent basis a switch such as a reed switch is provided. As the reed switch passes in close proximity to a magnet on the frame, the reed switch causes the resetting of the integration process in order to minimise the risk of cumulative integration errors from cycle to cycle. In order to drive the various electronic components an appropriate power source is provided. The processed data is then transmitted through a wireless transmitter to an appropriately positioned receiver which might be part of a display. A receiver is provided to allow the processor to take into account the data obtained from further single axis angular rate sensors. The receiver might also be used to change the settings of the processor or other electronic components which might require remote configuration.

In order to take into account the rotation of the bicycle (in particular in a pitch mode of rotation) a second single axis angular rate sensor is provided on the frame. This further single axis angular rate sensor is provided together with a transmitter and a power source to allow the data obtained from the sensor to be transmitted to the processor in order for it to nullify the effects of pitch in the calculation of the primary 1-axis angular rate sensor.

In order to maintain the accuracy of the integration, a magnet might be provided as part of the frame to interact with the reed switch if provided in the crank.

Whilst the provision of a reed switch for resetting at a fixed indexed position around the revolution is an option, further embodiments might include an optical switch, a tilt switch, and a hall-effect sensor. The provision of an optical switch would remove the requirement of providing a magnet on the bicycle frame and is therefore thought to be particularly advantageous.

In an embodiment of a bicycle two crank arms are provided typically 180 degrees apart. The angular position measurement system therefore only needs to be incorporated in one of the arms since if the angle of one of the arms is determined, the angle of the other can be readily determined. The strain gauges or other sensors sensing values representative of a force might however be provided in both crank arms of a bicycle.

The position of the gyro in the crank would typically be at a spaced apart location from the bicycle engaging portion of the crank with the active axis of the rotation of the gyro being parallel to the axis of rotation of the crank.

The gyro might be configured to output an analogue voltage proportional to the angular speed (for example units of degree per second) the gyro output voltage is preferably sampled and integrated with respect to time.

The integration is preferably performed by a micro-controller or processor provided in the crank. The integration of the angular speed with respect to time yields the angle. The integration might be reset once per revolution by a micro-controller in the crank.

The reset is preferably performed at a fixed indexed position for each revolution. In order to do so, a reed switch is fitted to the crank, in a preferred embodiment, whilst a magnet is fitted to the bike frame. The action of the reed switch when sweeping past the magnet is detected by the micro-controller in order to reset the integration process.

Other types of Gyros might be employed such as a dual or tri-axis gyro with one axis being used as above. In a preferred embodiment the gyro has a measurement range of up to 2,000 degrees per second. This range of operation would allow the gyro to comfortably cope with the predicted maximum speed of five revolutions per second.

Crank position may be calculated by integration of the output from the angular rate gyro. The integrator may be reset by the reed switch index position input, as used for average cadence calculation, and may then accumulate the output samples from the angular rate gyro to provide position. Resetting of the integrator on each crank revolution is preferable to prevent accumulation of errors over multiple revolutions.

In this embodiment, the crank position is obtained by summing the gyro output signal over 1 revolution:

$$\sum (ADC\_Count_{gyro} - Gyro_{zero\_offset}) * CrankPosition_{factor}$$

$$Gyro_{zero\_offset} = (1.35 * 4096) / 3.0 = 1843 \text{ (as for cadence calculation)}$$

In order to provide accurate measurements from the gyro output, it will be necessary to individually calibrate both the zero offset and sensitivity values. (This may not be required if zero offset and/or sensitivity is consistent for an individual device - if this is the case then the zero offset and sensitivity calibration values can be set at hardware build time and left unchanged).

Consider the crank rotating at 60rpm:

$$\begin{aligned} \text{Cadence} \quad &= 60\text{rpm} \\ &= (360 * 60) / 60\,°\text{s}^{-1} \\ &= 360\,°\text{s}^{-1} \end{aligned}$$

Gyro sensitivity $0.5\text{mV}/°\text{s}^{-1}$

$$\begin{aligned} V_{gyro} \quad &= 360\,°\text{s-1} \\ &= 1.35 + 0.5*360 \\ &= 1530\text{mV} \\ ADC\_Comit_{gyro} \quad &= 4096 * (1.530/3.0) \\ &= 2088.96 \end{aligned}$$

At 60rpm (1rev/sec, $360\,°\text{s}^{-1}$):

$$\begin{aligned} \sum (ADC\_Count_{gyro} - Gyro_{zero\_offset}) : \quad &= Iteration\_Rate *(ADC\_Count_{gyro} - Gyro_{zero\_offset}) \\ &= 250 * (2088.96 - 1843.2) \end{aligned}$$

(continued)

$$= 250 * 245.76$$
$$= 61440$$

With varying speed the gyro output and number of samples per revolution will vary, the result being a constant value for the end of rotation accumulator. Under default conditions this will be the value calculated above.

To express this in degrees:

$CrankPosition_{degrees}$ = $CrankPositionAccumulator_{act}/CrankPosition_{factor}$
Now: 61440 Counts = $360°$
Hence: $CrankPosition_{factor}$ = $61440/360$
= 170.67

In order to maintain accuracy, whilst using integer arithmetic this can be expressed as 17067 (ie: *100)

The position calculation shall be carried out as :

$CrankPosition_{degrees}$ = $CrankPositionAccumulator_{act} *1000/CrankPosition_{factor}$

The parameter $CrankPositionAccumulator_{max}$ and $CrankPosition_{factor}$ shall be held in NV memory (EEPROM). It shall be possible to set these parameters via the ANT based configuration / debug connection. The default value for the parameters shall be:

$CrankPositionAccumulator_{max}$ = 61440
$CrankPosition_{factor}$ = 17067

The calculation may be carried out using 32-bit integer arithmetic, providing resolution of $0.1°$.

In a further embodiment of the invention, a system of co-rotatable crank arms is provided equipped with instruments or sensors to measure the torque and force being applied by the respective left or right leg of a rider of a bicycle. The right and left hand crank arms contain a number of components in common with one another. Each crank arm may in preferred embodiments contain a power source, a transmitter, a receiver, and a force and/or a torque sensor. In this embodiment, the sensor measures the force component in the downward direction (for example at 6 o'clock) and another force component which is also known as the torque which is a force component in a direction substantially perpendicular to the downward force (for example at 3 o'clock). In addition, one of either of the left or right hand crank will contain the angular rate sensor or gyro employed as described in previous embodiments to derive the position of the crank and the cadence. In this embodiment, the angular rate sensor is located in the left hand crank arm only since the left hand crank is located at 180 degrees relative to the right hand crank, the position determined by the angular rate sensor of one of the crank arms is sufficient to determine the position of the other crank arm.

The crank arms incorporate the necessary processing means or processor to allow them to operate in distinct modes. A receiver which may be located remotely from the crank arms on the bicycle may be equipped with means for wirelessly changing the mode of operation of the respective crank arms. An appropriate transmitter of a signal may be provided for this endeavour. In a first mode of operation, the wireless transmitters of the crank arms are configured to communicate together whilst in a second mode of operation, the wireless transmitters of the crank arms are configured to communicate directly to a receiver located remotely from the crank arms.

In a preferred embodiment, each one of the crank arms operates in either ANT+ mode or in ANT mode. Other protocols may be employed as appropriate such as BLUETOOTH 4.0.

In the ANT+ mode, the left crank is configured to operate as the ANT+ sensor master. In this configuration, one of the channels of the left crank may be configured to employ the ANT+ bicycle power device master channel configuration. It may be configured to transmit power data pages interleaved with other data pages (e.g. manufacturer's ID, product information, battery status) at a predetermined interval. In a preferred embodiment, the interval may be set at 15 seconds. The left crank has an additional ANT channel which may be configured as a slave channel capable of receiving data from the right crank. The sampling across this channel may also be at a predetermined rate. The rate of transmission may be for example 8 Hertz. The data received from the right crank may incorporate either torque only or torque and force data. The left crank which is equipped with an angular rate sensor processes the data received from the right crank arm in conjunction with torque and/or force, and cadence data to derive power data. In addition, the processing taking place in the left crank arm may also determine the left/right pedal contribution.

In a second mode of operation, the left and right hand crank arms are configured to operate in a high speed ANT mode. The switching from the ANT+ mode to the ANT mode may be triggered by despatching an ANT command as an acknowledge type message wirelessly to the crank arms. Upon receipt of this message, the respective crank arms will be reconfigured to transmit in a high speed ANT mode instead of an ANT+ mode.

As part of this reconfiguration, the left crank arm will close the ANT+ channel and reconfigure its slave channel, which had previously been receiving data from the right crank arm, to a master channel transmitting and sampling data at a much higher rate. The rate may be predetermined and may for example be up to 192 Hertz. The right crank will increase its data rate from 8 Hertz up to a maximum of 192 Hertz. The data sent from the right crank may be essentially the same as in the first mode of operation. It may however be at a higher rate. With regard to the left crank arm in this configuration it will not transmit ANT+ data pages but rather, amongst others, torque, force, position, cadence and angular velocity data. Both the crank arms will in this mode of operation sample data at a higher rate.

In order to ensure good wireless reception at the receiver, the left and right channels may have distinct parameters within their respective channel ANT configurations. These include widely spaced RF frequencies, different device types, and a device number generated from the respective embedded micro-controllers' serial number.

To exit from this mode and return to the ANT+ mode the left and right crank arms may be configured to receive an acknowledged type message NANT. Additionally, the cranks may be configured to time out of this second mode of operation if they do not receive an ANT message at least once every 30 seconds. Upon exiting the high speed mode the left crank will reopen the ANT+ channel and reconfigure the high speed master channel to a slow speed slave channel to again receive data from the right crank. The right crank arm itself will reduce its transmit rate to a predetermined lower rate which may be for example 8 Hertz. Both crank arms will then reduce their sampling rate to resume operation in the ANT+ mode.

In a further embodiment, the cranks may be used in several different modes of operation dependent on the information that the rider wishes to display and collect during a riding session.

The cranks may be configured to operate first of all in the ANT+ mode. In this mode, power data may be transmitted from the cranks using the ANT+ protocol at a rate of 4Hz. In this mode of operation, it is expected that the cranks will be compatible with other ANT+ enabled devices which will allow compatibility with ANT+ display devices.

Transmission of power data at 4Hz is advantageous in determining the average power produced whilst pedalling.

When a compatible data logger is brought into close proximity of the cranks, the logger will be configured to detect the presence of the cranks and transmit a configuration command to the cranks instructing them to enter a different operational mode. The mode of operation will be dependent on the rider's requirement for either medium or high speed data.

The high speed data rate mode (high data rate being classed as a data transmitted at a rate >150Hz). In this mode data from the cranks may be transmitted using the ANT protocol. Crank force (up to 3 axes) and position data will preferably be transmitted at a high rate. Data collected by the logger at this rate allows the rider's pedalling technique to be analysed in great detail as the forces applied at a specific point of the crank position is known.

The medium data rate mode would transmit data at a rate of in the order of 10Hz to150Hz. ). In this mode data from the cranks may be transmitted using the ANT protocol. Crank force (up to 3 axes) and position data maybe transmitted at a medium rate. Data collected by the logger in this mode allows the riders pedalling technique to be analysed (albeit with less resolution of data than the high speed mode). One of the further benefits of a lower data rate for certain applications will be an increase in the sensor's battery life.

## Claims

1. A cycle crank (1) comprising a pair of crank arms, each crank arm comprising a sensor (4) for determining, in use, a value representative of a force applied to said crank arm during a revolution of said crank arm; and a wireless transmitter; wherein both said crank arms are configured to operate in a first mode of operation and in a second mode of operation; in said first mode of operation the wireless transmitters of said crank arms communicate together and in said second mode of operation said wireless transmitters of said crank arms communicate directly to a receiver located remotely from said crank arms; **characterised in that** in said first mode of operation said transmitters transmit at a first rate of transmission and in said second mode of operation said transmitters transmit at a second rate of transmission; said second rate of transmission being higher than said first rate of transmission.

2. A cycle crank according to claim 1, wherein a first crank arm incorporates a sensor master channel transmitting data; said first crank arm further incorporating a slave channel for receiving data from said second crank arm containing force or torque data from said second crank arm; whereby the force or torque data from said second crank arm in conjunction with force or torque data and cadence data from said first crank arm allows power to be calculated.

3. A cycle crank according to claim 1, wherein a first crank arm incorporates a sensor master channel transmitting data; said first crank arm further incorporating a slave channel for receiving data from said second crank arm containing force or torque data from said second crank arm; whereby the force or torque data from said second crank arm in conjunction with force or torque data and cadence data from said first crank arm allows power to be calculated.

4. A cycle crank according to claim 3, wherein in a second mode of operation said first crank arm reconfigures its slave channel as a master channel for transmitting data at a higher rate of transmission and said second crank arm transmits data at a higher rate of transmission than in the first mode of operation.

5. A cycle crank comprising at least one crank arm, each crank arm comprising a sensor for determining, in use, a value representative of a force applied to said crank arm during a revolution of said crank arm; and a wireless transmitter; wherein said at least one crank arm is configured to operate in a first mode of operation where said transmitter is configured to transmit at a first rate of transmission; **characterised in that** said transmitter is configured to transmit in a second mode of operation at a second rate of transmission; said second rate of transmission being higher than said first rate of transmission.

6. A cycle crank according to claim 5, wherein said wireless transmitter is configured to transmit in one of at least three modes of operation at rates of transmission pertaining to three different frequency ranges.

7. A cycle crank according to claim 6, wherein a first range comprises frequencies lower than 10 Hz.

8. A cycle crank according to claim 6, wherein a second range comprises frequencies of 10 to 150 Hz.

9. A cycle crank according to claim 6, wherein a third range comprises frequencies of 150 Hz and greater.

10. A cycle incorporating at least one cycle crank according to any of the preceding claims.


**Patentansprüche**

1. Fahrradkurbel (1), umfassend ein Paar Kurbelarme, jeder Kurbelarm umfassend einen Sensor (4) zur Ermittlung, im Gebrauch, eines Werts, der für eine während einer Umdrehung des Kurbelarms auf den Kurbelarm ausgeübte Kraft repräsentativ ist; und einen drahtlosen Sender; wobei beide Kurbelarme dafür konfiguriert sind, in einem ersten Betriebsmodus und in einem zweiten Betriebsmodus betrieben zu werden, wobei in dem ersten Betriebsmodus die drahtlosen Sender der Kurbelarme miteinander kommunizieren und in dem zweiten Betriebsmodus die drahtlosen Sender der Kurbelarme direkt zu einem Empfänger kommunizieren, der sich entfernt von den Kurbelarmen befindet; **dadurch gekennzeichnet, dass** die Sender in dem ersten Betriebsmodus mit einer ersten Übertragungsrate senden und die Sender in dem zweiten Betriebsmodus mit einer zweiten Übertragungsrate senden; wobei die zweite Übertragungsrate höher ist als die erste Übertragungsrate.

2. Fahrradkurbel gemäß Anspruch 1, wobei ein erster Kurbelarm einen Sensor-Master-Kanal enthält, welcher Daten überträgt, der erste Kurbelarm des Weiteren einen Slave-Kanal zum Empfangen von Daten von dem zweiten Kurbelarm enthält, welche Kraft- oder Drehmomentdaten von dem zweiten Kurbelarm enthalten; wodurch die Kraft- oder Drehmomentdaten von dem zweiten Kurbelarm in Verbindung mit Kraft- oder Drehmomentdaten und Kadenzdaten von dem ersten Kurbelarm die Berechnung der Leistung ermöglichen.

3. Fahrradkurbel gemäß Anspruch 1 wobei ein erster Kurbelarm einen Sensor-Master-Kanal enthält, welcher Daten überträgt, der erste Kurbelarm des Weiteren einen Slave-Kanal zum Empfangen von Daten von dem zweiten Kurbelarm enthält, welche Kraft- oder Drehmomentdaten von dem zweiten Kurbelarm enthalten; wodurch die Kraft- oder Drehmomentdaten von dem zweiten Kurbelarm in Verbindung mit Kraft- oder Drehmomentdaten und Kadenzdaten von dem ersten Kurbelarm die Berechnung der Leistung ermöglichen.

4. Fahrradkurbel gemäß Anspruch 3, wobei in einem zweiten Betriebsmodus der erste Kurbelarm seinen Slave-Kanal als einen Master-Kanal neu konfiguriert, um Daten mit einer höheren Übertragungsrate zu senden, und der zweite Kurbelarm Daten mit einer höheren Übertragungsrate sendet als in dem ersten Betriebsmodus.

5. Fahrradkurbel, umfassend mindestens einen Kurbelarm, jeder Kurbelarm umfassend einen Sensor zur Ermittlung, im Gebrauch, eines Werts, der für eine während einer Umdrehung des Kurbelarms auf den Kurbelarm ausgeübte Kraft repräsentativ ist; und einen drahtlosen Sender; wobei der mindestens eine Kurbelarm dafür konfiguriert ist, mit einer ersten Übertragungsrate zu senden; **dadurch gekennzeichnet, dass** der Sender dafür konfiguriert ist, in einem zweiten Betriebsmodus mit einer zweiten Übertragungsrate zu senden; wobei die zweite Übertragungsrate höher ist als die erste Übertragungsrate.

6. Fahrradkurbel gemäß Anspruch 5, wobei der drahtlose Sender dafür konfiguriert ist, in einem von mindestens drei Betriebsmodi mit Übertragungsraten zu senden, die sich auf drei verschiedene Frequenzbereiche beziehen.

7. Fahrradkurbel gemäß Anspruch 6, wobei ein erster Bereich Frequenzen niedriger als 10 Hz umfasst.

8. Fahrradkurbel gemäß Anspruch 6, wobei ein zweiter Bereich Frequenzen von 10 bis 150 Hz umfasst.

9. Fahrradkurbel gemäß Anspruch 6, wobei ein dritter Bereich Frequenzen von 150 Hz und mehr umfasst.

10. Fahrrad, das mindestens eine Fahrradkurbel gemäß einem der vorherigen Ansprüche enthält.


**Revendications**

1. Une manivelle de cycle (1) comprenant une paire de bras de manivelle, chaque bras de manivelle comprenant un capteur (4) pour déterminer, lors de l'utilisation, une valeur représentative d'une force appliquée audit bras de manivelle durant une révolution dudit bras de manivelle ; et un transmetteur sans fil ; où les deux dits bras de manivelle sont configurés pour fonctionner dans un premier mode de fonctionnement et dans un deuxième mode de fonctionnement ; dans ledit premier mode de fonctionnement les transmetteurs sans fil desdits bras de manivelle communiquent entre eux et dans ledit deuxième mode de fonctionnement lesdits transmetteurs sans fil desdits bras de manivelle communiquent directement avec un récepteur situé à distance desdits bras de manivelle ; **caractérisé en ce que** dans ledit premier mode de fonctionnement, lesdits transmetteurs transmettent à une première vitesse de transmission et dans ledit deuxième mode de fonctionnement lesdits transmetteurs transmettent à une deuxième vitesse de transmission ; ladite deuxième vitesse de transmission étant plus élevée que ladite première vitesse de transmission.

2. Une manivelle de cycle selon la revendication 1, où un premier bras de manivelle incorpore un canal maître de capteur transmettant des données ; ledit premier bras de manivelle incorporant en outre un canal esclave pour recevoir des données en provenance dudit deuxième bras de manivelle contenant des données de force ou de couple en provenance dudit deuxième bras de manivelle ; les données de force ou de couple en provenance dudit deuxième bras de manivelle conjointement avec les données de force ou de couple et les données de cadence en provenance dudit premier bras de manivelle permettent à la puissance d'être calculée.

3. Une manivelle de cycle selon la revendication 1, où un premier bras de manivelle incorpore un canal maître de capteur transmettant des données ; ledit premier bras de manivelle incorporant en outre un canal esclave pour recevoir des données en provenance dudit deuxième bras de manivelle contenant des données de force ou de couple en provenance dudit deuxième bras de manivelle ; les données de force ou de couple en provenance dudit deuxième bras de manivelle conjointement avec les données de force ou de couple et les données de cadence en provenance dudit premier bras de manivelle permettent à la puissance d'être calculée.

4. Une manivelle de cycle selon la revendication 3, où dans un deuxième mode de fonctionnement ledit premier bras de manivelle reconfigure son canal esclave comme un canal maître pour transmettre des données à une vitesse de transmission plus élevée et ledit deuxième bras de manivelle transmet des données à une vitesse de transmission plus élevée que dans le premier mode de fonctionnement.

5. Une manivelle de cycle comprenant au moins un bras de manivelle, chaque bras de manivelle comprenant un capteur pour déterminer, lors de l'utilisation, une valeur représentative d'une force appliquée audit bras de manivelle durant une révolution dudit bras de manivelle ; et un transmetteur sans fil ; où ledit au moins un bras de manivelle est configuré pour fonctionner dans un premier mode de fonctionnement où ledit transmetteur est configuré pour transmettre à une première vitesse de transmission ; **caractérisé en ce que** ledit transmetteur est configuré pour transmettre dans un deuxième mode de fonctionnement à une deuxième vitesse de transmission ; ladite deuxième vitesse de transmission étant plus élevée que ladite première vitesse de transmission.

**6.** Une manivelle de cycle selon la revendication 5, où ledit transmetteur sans fil est configuré pour transmettre dans un d'au moins trois modes de fonctionnement à des vitesses de transmission appartenant à trois plages de fréquences différentes.

**7.** Une manivelle de cycle selon la revendication 6, où une première plage comprend des fréquences inférieures à 10 Hz.

**8.** Une manivelle de cycle selon la revendication 6, où une deuxième plage comprend des fréquences de 10 à 150 Hz.

**9.** Une manivelle de cycle selon la revendication 6, où une troisième plage comprend des fréquences de 150 Hz et plus.

**10.** Un cycle incorporant au moins une manivelle de cycle selon n'importe lesquelles des revendications précédentes.

FIG. 1

| CRANK | FRAME |
|---|---|
| Strain gauge | |
| 1-axis angular rate sensor | 1-axis angular rate sensor |
| Reed Switch | Transmitter |
| Processor | Power source |
| Power source | Magnet |
| Transmitter | |
| Receiver | |

FIG. 2

DISPLAY/RECEIVER

## LEFT CRANK ARM

Sensor (Torque, Force)

Angular rate sensor

Reed Switch

Processor

Power source

Transmitter

Receiver

## RIGHT CRANK ARM

Sensor (Torque, Force)

Processor

Power source

Transmitter

Receiver

FIG. 3

EP 2 925 595 B1

**EP 2 925 595 B1**

**REFERENCES CITED IN THE DESCRIPTION**

**Patent documents cited in the description**

- WO 201106348 A
- WO 2009006673 A
- EP 2058637 A